# EUROPEAN PATENT APPLICATION

(11) **EP 1 317 957 A1**
(43) Date of publication of application: **11.06.2003**
(21) Application number: 02080028.0
(22) Date of filing: 02.12.2002
(51) Int. Cl.: B01J 20/18

(54) **Zinc-substituted zeolite adsorbents and processes for the use thereof in gas separation**

(30) Priority: 03.12.2001 US 998141
(71) Applicant: PRAXAIR TECHNOLOGY, INC., Danbury, CT 06810-5113 (US)
(72) Inventor: Stephenson, Neil Andrew, East Amherst, New York 14051 (US); Hou, Qisheng, East Amherst, New York 14051 (US); Guliants, Vadim, Mason, Ohio (US)
(74) Representative: Elzaburu, Alberto de

(57) **Abstract**

Monovalent and/or divalent cation-exchanged zeolite adsorbents, such as zinc-substituted zeolites, for use in separating nitrogen from a gas, such as air, and a process for use of the adsorbents in a PSA cycle to economically and effectively produce nitrogen from air.

## Description

### Field of the Invention

The invention relates to a novel group of zeolite adsorbents containing divalent atoms in the framework to generate higher charge density frameworks containing more non-framework cations relative to composition structures with only trivalent or higher valent atoms and processes for using such novel adsorbents having enhanced adsorption properties for gases, such as nitrogen.

### BACKGROUND OF THE INVENTION

The separation of mixtures of gases, especially air, by so-called pressure swing adsorption processes is well-known to those skilled in gas separation technology. In principle, a PSA process involves the following steps:
(a) contacting a gaseous feed mixture of two or more different gases with an adsorbent under a first, relatively high, pressure, thereby causing at least one of the gases to be selectively adsorbed into the adsorbent, and producing a gaseous first product mixture containing a greater proportion of the less selectively adsorbed gas or gases than the feed mixture;
(b) separating the first product mixture from the adsorbent; and
(c) reducing the pressure on the adsorbent to a second pressure lower than the first pressure, thereby causing desorption from the adsorbent sieve of a gaseous second product mixture containing a greater proportion of the selectively adsorbed gas(es) than the first mixture.

In industrial practice, PSA processes tend to be considerably more complicated than this simple description would suggest, and may involve one or more adsorption vessels usually referred to as "beds". Prior art describes PSA processes using multi-bed systems.

PSA processes represent an alternative method for oxygen separation from other gases to large-scale fractional distillation. In many PSA processes, zeolites are the preferred adsorbents because of their high adsorption capacity and their good selectivity. Both these properties are due, in part, to the microporous nature of zeolite structures, in which a large number of pores and cages of a consistent size extend throughout the lattice framework and cations occupy well-defined and consistent positions in the pores and cages. Most of these cations occupy hidden sites in the zeolite and are not accessible to gas molecules. However, for some compositions, a significant fraction of non-framework cations may be accessible to gas phase molecules. Non-bonded interactions of these active (exposed) cations with nitrogen molecules are responsible for the equilibrium nitrogen selectivity of low silica zeolites. The prior art attempted to increase nitrogen selectivity by employing various types of non-framework cations with low silica zeolites such as LTA, FAU, and EMT. These three letter codes recommended by the International zeolite Association refer to various zeolite structures, e.g., FAU for zeolite X, Y and mineral faujasite. These codes refer to how framework atoms are connected to one another in each structure, rather than to actual chemical composition.

For example, U.S. Patent 2,882,243 by Milton describes the use of zeolite A having a silica/alumina ratio of 1.85±0.5 and containing hydrogen, ammonium, alkali metal, alkaline earth metal or transition metal cations as an adsorbent for separating nitrogen and oxygen. U.S. Patent 2,882,244 also to Milton describes a similar process but in which X is a different type of zeolite having a silica/alumina ration of 2.5±0.5.

U.S. Patent 3,140,933 to McKee describes the use of zeolite X which has been ion-exchanged with alkali or alkaline earth metal cations as adsorbents for separating nitrogen and oxygen. Nitrogen adsorption performance improves when some of the sodium cations are replaced with lithium cations.

U.S. Patent 4,925,460 discloses a process for separating a gas mixture comprising components with different heats of adsorption, such as nitrogen from air, employing lithium-exchanged chabazite having a Si/Al ratio from 2.1 to 2.8 and at least 65% of the exchangeable cation capacity in the lithium form.

U.S. Patent 5,562,756 discloses a EMT structure with a Si/Al ratio less than 2.0 and a lithium cation exchange of at least 80%, preferably including an intergrowth with a FAU structure, where the EMT structure content is between 5 and 100%, for selectively adsorptive separating nitrogen from oxygen.

U.S. Patent 5,413,625 discloses a lithium-alkaline earth metal X and A zeolites containing specific molar ratios of lithium to alkaline earth metal and to the use of these materials in separating nitrogen and oxygen from mixtures thereof, especially air, by pressure swing adsorption (PSA) processes.

U.S. Patent 5,616,170 and European patent application EP 0758561A1 discloses chabazite, offretite, erionite, levyne, mordenite, gmelinite, zeolite A, zeolite T, EMC-2, ZSM-3. ZSM-18, ZK-5, zeolite L and zeolite beta whose exchangeable cations are composed of 95 to 50% lithium and trivalent cations as preferentially adsorbing nitrogen from gas mixtures.

U.S. Patent 5,997,841 and European patent application EP 0895966A1 disclose the FAU structure zincoaluminosilicates as novel gas separation adsorbents, particularly for separating oxygen from nitrogen in air.

EP 0 476 901 A2 discloses a zinc substitution in the frameworks of zeolites with main channel size >0.22nm and Si/Al molar ratio <124.1.

In the prior art, the nitrogen selectivity was increased by lowering the Si/Al ratio of the zeolite frameworks and deploying non-framework cations with high charge-to-radius ratios. The prior art compositions are limited by the Si/Al> 1 in accordance with Loewenstein's rule which forbids Al-O-Al linkages in zeolite frameworks. Si/Al = 1.0 already corresponds to the lowest Si/Al ratio possible. In the Li-form of zeolite X (Si/Al = 1.0), only 32 out of 96 cations per unit cell (cubic symmetry) are located in the exposed sites III and III'. The other 64 lithium cations are located in the hidden sites I' and II. Despite the fact that the active cations in zeolite LiX(1.0) amount to only 1/3 of the total cations, LiX(1.0)(SiO₂/Al₂O₃ = 2.0 or Si/Al = 1.0) displays the best performance at ambient conditions among known zeolites.

One object of the present invention is to increase the number of exposed and active cations beyond that corresponding to the SiAl = 1.0 zeolites in order to further improve their nitrogen selectivity.

### SUMMARY OF THE INVENTION

The invention relates to a novel aluminosilicate zeolite adsorbent comprising a molecular structure containing at least one monovalent and/or divalent atom substituted for at least one trivalent or higher valent atom so that at least one exposed and active non-framework charge balancing cation is increased in the structure to effect higher selective gas (nitrogen) selectivity over that of a similar molecular structure having only trivalent atoms or higher valent atoms. The invention also relates to a process for selectively adsorbing nitrogen from a gas mixture, such as air, containing nitrogen and at least one less strongly adsorbent component which comprises contacting the gas mixture with a zone of an adsorbent which is selective for the adsorption of nitrogen, selectively adsorbing nitrogen in the adsorbent and passing the gas mixture less the adsorbent nitrogen out of the zone wherein the adsorbent comprises an aluminosilicate zeolite material containing a molecular structure containing at least one monovalent and/or divalent atom substituted for at least one trivalent or higher valent atom so as to increase at least one exposed and active non-framework charge balancing cation to effect higher nitrogen selectivity over that of a similar molecular composition having only trivalent atoms or higher valent atoms.

One embodiment of the present invention relates to the preparation of novel zeolite adsorbents which contain divalent framework atoms, i.e. Zn, instead of trivalent A1, and which possess superior separation efficiency for oxygen separation due to higher number of active non-framework cations. In zeolite terminology, if an atom is connected to four other atoms via oxygen bridges forming a so-called 4-connected tetrahedral net, such an atom is termed a framework atom and the bridging oxygen is termed framework oxygen. Typically, non-framework cations are those that balance the framework charge and are located in the cages or pores of zeolites, such as LiX(1.0) (SiO₂/Al₂O₃ = 2.0 or Si/Al = 1.0), and are responsible for the observed nitrogen adsorption selectivity. It was discovered that the substitution of divalent elements, such as zinc (Zn²⁺), for the framework atoms (Al³⁺) in low silica zeolites would result in higher number of non-framework cations required for total charge balance and, therefore, higher nitrogen selectivity provided that such substitution increases the amount of exposed cations. For example, consider a simplified empirical formula of the Li-form of any zeolite with Si/Al = 1.0 and if one Al³⁺ is substituted by one Zn²⁺ in such a zeolite, one additional Li⁺ is required for charge balance.

The current invention indicates a range of structures where introduction of Zn will improve the sorption behavior. The present invention is aimed at increasing the total number of non-framework cations. For example, the structure and sorption properties of Li-EMT(1.0) (SiO₂/Al₂O₃ = 2.0), where 4 framework Al atoms were substituted by 4 Zn atoms, was produced. Hence, the unit cell composition Li₅₂Zn₄Al₄₄Si₄₈O₁₉₂ as compared to Li₄₈Al₄₈Si₄₈O₁₉₂ for the true unit cell of LiEMT(1.0). This structure is provided only as an example, and the invention relates to any aluminosilicate zeolite preferably with suitable structures containing 10 ring pores or greater and compositions with enough charge density to create exposed cations.

Suitable adsorbents for this invention are selected from its group comprising EMT, EMT/FAU, BEA, CAN, GME, LTL, MAZ, MOR, MTW and OFF and from the group comprising Li-ZnEMT, Li-ZnEMT/FAU, Li-ZnBEA, Li-ZnCAN, Li-ZnGME, Li-ZnLTL, Li-ZnMAZ, Li-ZnMOR, Li-ZnMTW and Li-ZnOFF.

The novel zeolite adsorbent would effectively allow the number of non-framework cations to increase beyond that permitted by the Lowenstein's rule for aluminosilicate zeolite (Si/Al> or = 1.0) and thus the introduction of divalent elements at the same Si/M ratio equal to Si/Al would effectively overcome the current Si/Al synthesis limit for other zeolites, for instance, zeolite beta is currently synthesized at Si/Al>5.

Preferably, the divalent atoms for the invention is zinc although cobalt, iron, magnesium, manganese, beryllium or the like, could be used. Monovalent atoms could also be used as substitutes for trivalent and/or higher valent atoms to effectively increase the exposed non-framework charge balancing cations. Preferably, the novel divalent-substituted zeolite adsorbents for this invention may contain at least 8 ring pores or more, preferably 10 ring pores or greater.

### Brief Description of the Drawings.

Figure 1 is a sketch of a molecular structure of zeolite EMT.

Figure 2 is a graph of the relationship between exposed Li and EMT framework compositions (true unit cell).

Figure 3 is a graph of N₂ and O₂ isotherms of adsorption on zeolites LiEMT and Li-ZnEMT(1.0) at 300K.

Figure 4 is a graph of N₂/O₂ ratio (selectivity) for zeolites LiEMT and Li-ZnEMT(1.0) at 300K.

### Detailed Description of Embodiments of The Invention

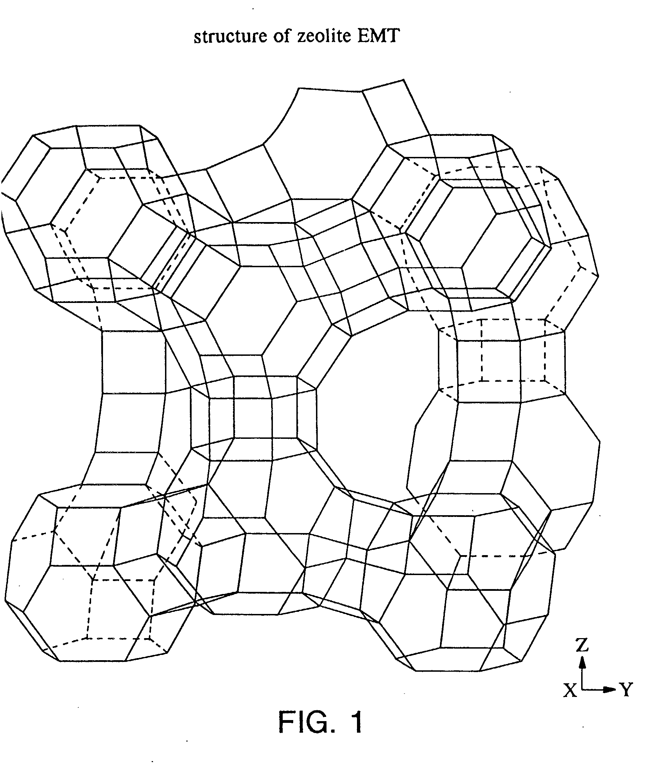

The zeolite EMC-2 that was used in the structure and sorption modeling for our examples has an EMT structure (Figure 1). EMT can be viewed as a hexagonal version of FAU. The EMT structure is built from so-called sodalite cages connected via double 6-rings to form a three dimensional pore system. EMT has a large channel (12-ring). The 6-ring opening of sodalite cages are too small for small gas molecules such as nitrogen and oxygen to penetrate. In addition, there are 3 general cations sites, I', II, and III/III', in the case of LiEMT. Only Li in sites III/III' are accessible to gas molecules and these sites are responsible for the large capacity and good selectivity. Considerable experimental and molecular modeling evidence indicates that the 48 Li cations in the true unit cell are equally distributed among sites I', II and III/III' in the EMT structure (96 cations per expanded unit cell).

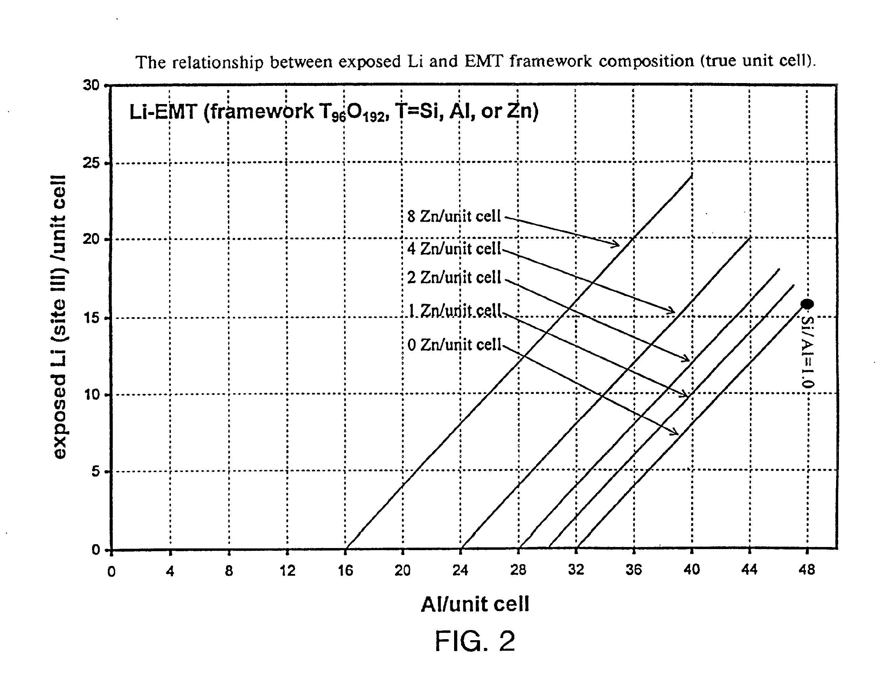

A good parent zeolite should have medium to high charge density where exposed cations are present before some Al is replaced by divalent species. Here, "parent" describes a composition (hypothetical or real) where the divalent atom locations are occupied by aluminum The term "parent" does not imply that the parent is a precursor to the adsorbent containing framework divalent atoms. One reason for bringing charge density and exposed cations into this invention is that an earlier definition does not work all the time since it failed to recognize the importance of increasing the number of exposed cations. For example, (see Figure 2) the substitution of Zn into the EMT zeolite framework will increase the framework negative charge density, and more non-framework cations will be required (e.g. Li⁺) to balance the charges. Only after the number of Li⁺ reaches the critical values (32 for the true unit cell of EMT, 64 for the expanded unit cell), the Li⁺ begin to occupy the exposed site (Site III for EMT) and the adsorbents show significant improvement in nitrogen adsorption capacity. The adsorbents with high Al and Zn contents can have higher charge density than those of aluminosilicate zeolite adsorbents, even the adsorbents with Si/Al=1.0. The charge density of aluminosilicate zeolites has a limit since the zeolite framework compositions are limited by the Si/Al ≥ 1 in accordance with Loewenstein's rule which forbids Al-O-Al linkages in zeolite frameworks. Si/Al = 1.0 already corresponds to the lowest Si/Al ratio possible.

The present invention describes a novel group of zeolite adsorbents preferably with divalent atoms in the framework, which have improved nitrogen adsorption properties. These adsorbents were selected by molecular modeling techniques which predicted their adsorption properties. The reliability of the current molecular modeling approaches have been validated by comparing structures and sorption properties of reference LiX structures to the corresponding experimental data.

The molecular modeling approach consisting of the following:
A. Adopt the previously validated sorption forcefield, containing parameters for zeolite framework oxygen-gas molecules and non-framework Li gas molecule van der Waals interactions, as well as the partial charges on zeolite and gas molecules.
B. Use validated theoretical structures of hypothetical adsorbents, e.g., framework Zn substituted zeolite Li-EMT.
C. Perform Grand Canonical Monte Carlo modeling of nitrogen/oxygen sorption for these hypothetical adsorbents.

The following examples are provided to illustrate the adsorbents of the present invention.

### EXAMPLE 1

### Lithium-exchanged zeolite EMT and zeolite EMT containing framework Zn²⁺ atoms

The structure for the zeolite EMT framework was taken from an experimental study by Ch. Baerlocher, L.B. et al. (Microporous Materials 2 (1994) 269). For sorption simulation accuracy and convenience, the hexagonal cell of EMT (composition Li₄₈Al₄₈Si₄₈O₁₉₂ for Si/Al = 1.0 material) was transformed to an orthorhombic cell having the composition Li₉₆Al₉₆Si₉₆O₃₈₄ (expanded unit cell). Sites I' and II are the most stable and fully occupied (32 cations each) in the EMT structure. The remaining 32 Li⁺ cations are located in the exposed sites III/III' in accordance with the experimental and modeling data. The theoretical limit of 48 active cations may be achieved only when an additional 16 cations (48-32=16) are required to balance the higher negative charge on the framework for the expanded unit cell.

Li⁺ cations located in sites III/III' are responsible for the high nitrogen capacity and selectivity of the zeolite. Here, a practical path is described to increasing the negative framework charge leading to increased number of Li cations in the exposed site III/III' and higher nitrogen selectivity as compared with zeolite EMT(1.0).

According to the model, 8 framework Al³⁺ atoms were randomly substituted with 8 Zn²⁺ atoms in the structure EMT 1.0. The overall unit cell composition can be represented by Li₁₀₄Zn₈Al₈₈Si₉₆O₃₈₄ [so-called Li-ZnEMT(1.0)]. Li⁺ locations in sites I' and II were previously assigned (see above). The task of locating 40 remaining Li cations (32+8) is described in detail below.

### LOCATION OF NON-FRAMEWORK SPECIES

Charges and van der Waals parameters were assigned to each framework atom in accordance with the augmented cvff_aug forcefield validated for aluminosilicates (Insight II 4.0.0 program, Molecular Simulations Inc., San Diego, 1996). The Li⁺ cations in this forcefield have formal charges, while the framework atoms had the following charges: O=-1.2, Zn=+0.4, Si+2.4, and Al=+1.4. The charge on the zinc atoms was assigned to achieve electrical neutrality. Also, since the van der Waals parameters for Zn²⁺ atom are not defined in the cvff_aug forcefield, the assumption is made that they are identical to those of Al³⁺ atoms. This assumption is justified because both Al³⁺ and Zn²⁺ are rather small atoms with low polarizability and high effective charge. Therefore, Li⁺-Al³⁺/Zn²⁺ interactions are dominated by long-range electrostatic forces, and the van der Waals forces provided only minor contribution to the total interaction energy at relevant internuclear separations. A three-dimensional host reference grid with grid spacing of ca.0.5Å was created commensurate with the framework symmetry. The Li⁺ cation-framework non-bond electrostatic and repulsive-dispersive interactions were calculated at each grid point using the Eward summation method and a short range 5.5Å cutoff, respectively. A second, so-called Li⁺ cation reference grid of identical dimensions was constructed, a single Li⁺ cation place at its origin, and the interaction of a second Li⁺ cation at each grid point was computed. A Li⁺ cation was placed in the framework at the lowest energy position found in the preceding step, i.e. during computation of the Li⁺ cation-framework interaction. Since the framework contained an additional Li⁺ cation, the reference grid was updated by superimposing it with the Li⁺ cation reference grid, centered abut the location of the recently added Li⁺ cation. The lowest energy position was again determined and populated. These steps were repeated until all Li⁺ cations were added to the EMT framework.

### LATTICE ENERGY MINIMIZATION

The Li⁺ cation locations were then optimized using GULP energy minimization program using the BFGS minimiser and appropriate atomic penitential (Gale, J.D. J. Chem. Soc., Faraday Trans., 1997, 93, 629).

**TABLE 1**

| Li cation site occupancies in expanded unit cells of Li-EMT(1.0), Li-EMT(1.09) and Li-ZnEMT(1.0) | | | |
|---|---|---|---|
| Site | Site I' | Site II | Site III (and Site III' |
| Li-EMT(1.0) | 32 | 32 | 32 |
| Li-EMT(1.09) | 32 | 32 | 24 |
| Li-ZnEMT(1.0) | 32 | 32 | 40 |

Molecular modeling confirmed the expectations of much higher number of exposed Li cations occupying sites III/III' in the structure of Li-ZnEMT(1.0) than in LiEMT(1.0) (Table 1). The effect of the higher number of exposed Li cations on the adsorption behavior of this model system using a Metropolis Grand Canonical Monte Carlo method is shown below in Example 2.

### EXAMPLE 2

### Monte Carlo Sorption of Single Component Isotherms of Adsorption of Oxygen and Nitrogen on Zeolites LiEMT(1.0), LiEMT(1.09) and Li-ZnEMT(1.0).

The Monte Carlo Sorption method has been described in detail in A.J. Richards, K. Watanabe, N. Austin and M.R. Stapleton, Journal of Porous Material, 1995, 2, 43. In this method, nitrogen and oxygen molecules are randomly placed into the unit cell of a zeolite and the interaction energy between these molecules and zeolite is calculated. Nitrogen and oxygen molecules are then added, deleted, moved and rotated a very large number of times (>3,000,000 per pressure point). This is done to adequately sample the configuration space of the system and equalize the chemical potential of the molecules inside the zeolite pores with that of the gas phase. The average number of nitrogen and oxygen molecules inside the micropores after a large number of steps corresponds to their equilibrium sorption capacity. Some zeolites contain large regions of the unit cell, which may be occupiable, but inaccessible to gas molecules. The common procedure is to block such inaccessible regions of the unit cell as the sodalite cages in zeolite EMT, by placing large dummy atoms at their centers. These regions are then excluded from the simulation, with the simulation itself not being affected in any other aspect. The modeled adsorption of N₂ and O₂ in zeolites LiEMT(1.0) and Li-ZnEMT(1.0) at 300K was made using such fashion.

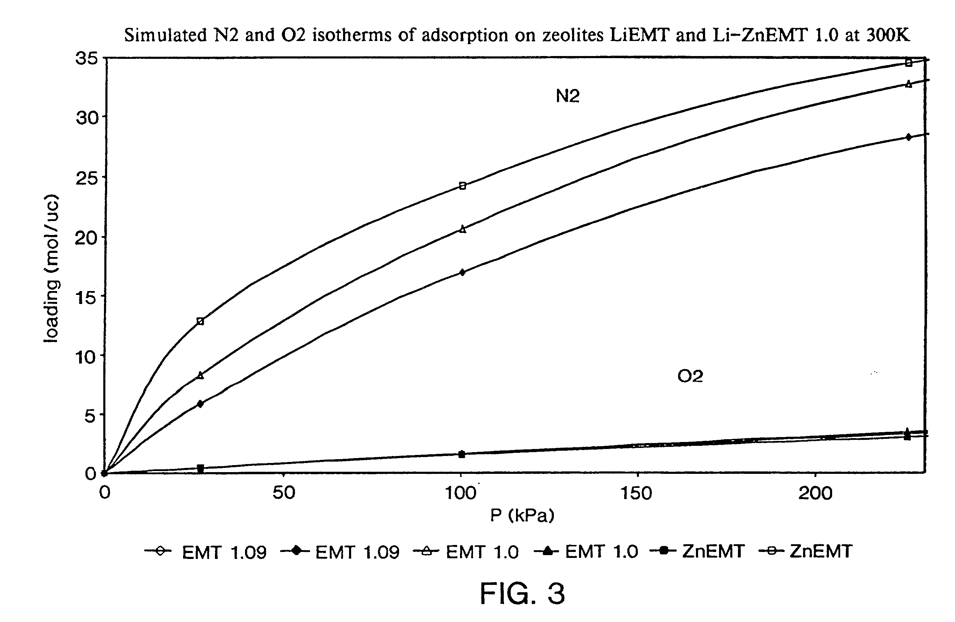

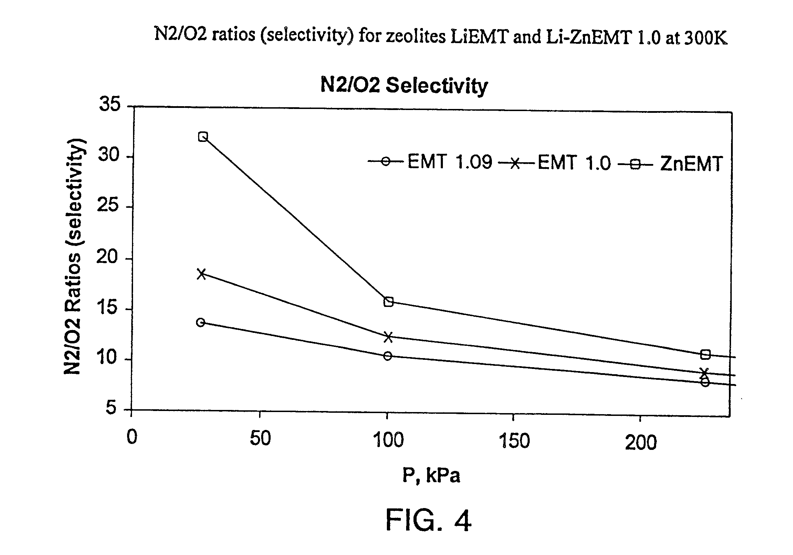

The simulated isotherms of adsorption for LiEMT(1.0), LiEMT(1.09) and Li-ZnEMT(1.0) are compared with the experimental sorption data for these zeolites in Figures 3 and 4 and shown in Table 2.

**TABLE 2**

| Simulated single component isotherms of N₂ and O₂ adsorption on zeolites LiEMT and Li-ZnEMT(1.0) at 300K. | | | | | | | | | |
|---|---|---|---|---|---|---|---|---|---|
| | 26.7 kPa | | | 100 kPa | | | 225 kPa | | |
| | N₂ mol/ uc* | O₂ mol/ uc | N₂/ O2 | N₂ mol/u c | O₂ mol/ uc | N₂/O₂ | N₂ mol/ uc | O₂ mol/ uc | N₂/O₂ |
| LiEMT (1.09) | 5.80 | 0.42 | 13.81 | 17.02 | 1.61 | 10.57 | 28.28 | 3.37 | 8.39 |
| LiEMT (1.0) | 8.36 | 0.45 | 18.58 | 20.57 | 1.64 | 12.54 | 32.80 | 3.51 | 9.34 |
| Li-Zn EMT (1.0) | 12.87 | 0.40 | 32.18 | 24.19 | 1.51 | 16.02 | 34.53 | 3.11 | 11.10 |

| | | | | | | | | | |
|---|---|---|---|---|---|---|---|---|---|
| *molecules per expanded unit cell of EMT containing 192 tetrahedral atoms. | | | | | | | | | |

The sorption model adequately predicts sorption behavior of existing zeolites (Figures 3 and 4) and thus it confirms that both the sorption capacity and nitrogen selectivity (expressed as the ratio of the single component loading of N₂ and O₂ at the special pressure) is proportional to the number of active cations located in sites III/III' for zeolite Li-EMT(1.0). The sorption model further indicated superior nitrogen sorption and selectivity of the framework Zn-substituted zeolite LiEMT(1.0) when compared to LiEMT(1.0). This superior nitrogen selectivity is due to the presence of additional Li⁺ cations in sites III'. These additional Li⁺ cations are required to balance the extra negative framework charge resulting from the substitution of divalent Zn²⁺ for Al³⁺ atoms into the framework of zeolite EMT(1.0).

According to the adsorption data shown in Table 2 and Figures 3 and 4, the N₂/O₂ selectivity at 225 kPa is ca. 19% higher for zeolite Li-ZnEMT(1.0) than LiEMT1.0. Based on theoretical predictions of cation locations and sorption data, it is believed that the higher nitrogen selectivity of the Li-ZnEMT(1.0) system resulted from the higher number of exposed and active Li⁺ cations located in the zeolitic supercages near sites III'.

### EXAMPLE 3

The framework Zn substitution creates an additional non-framework charge that does not necessarily lead to improved sorption properties in all tetrahedral frameworks. This example describes a situation where framework Zn substitution does not improve sorption properties. The reasons for such behavior are explained below.

Consider a unit cell of zeolite LiEMT at Si/Al= 5.32 with Li cations occupying sites I' and II located inside the hexagonal prisms connecting sodalite cages and the 6R of the sodalite cages, respectively. It is both experimentally observed and confirmed by molecular modeling that sites I' are inaccessible to gas molecules, while the sites II are accessible, but inactive as sorption sites. Sites II are inactive in sorption due to the presence of the framework atoms in their vicinity which cancel the strong electrostatic interaction of the Li cations with the gas molecules. Consider next a Li-ZnEMT structure at Si/(Al+Zn)=5 with Zn/Al=1. This corresponds to adding another 16 Li cations per full unit cell of EMT. These additional Li cations now completely fill sites I' (32 total), and the remaining 16 Li cations populate sites II, i.e. the 6R windows of the sodalite cages. Therefore, despite the fact that the Li cation content increased by 50%, sorption properties of this zeolite system remained virtually unchanged.

The following are some of the conclusions from the examples:
1. According to the sorption model, nitrogen sorption and selectivity of zeolite Li-EMT is proportional to the number of sites III/III' Li⁺ cations;
2. Substitution of divalent metal atoms, such as Zn, into the framework of zeolite EMT(1.0) would introduce additional non-framework cations into the exposed cation sites III';
3. The model Li-ZnEMT(1.0) system displayed higher N₂/O₂ selectivity as compared to LiEMT(1.0) due to proportionately higher number of sites III/III' Li⁺ cations;
4. Substitution of divalent metal atoms for higher valent atoms in tetrahedral frameworks is a general approach to increase active non-framework cation content and improve separation efficiency of gases with different polarity or quadrupole moment by adsorption methods, such as nitrogen from oxygen in air by PSA.

Obviously, many modifications and variations of the present invention are possible in light of the above. Thus, it is to be understood that, within the scope of the appended claims, this invention may be practiced otherwise than as specifically described above.

## Claims

1. A zeolite adsorbent comprising a molecular composition and structure containing at least one monovalent or divalent atom substituted for at least one trivalent or higher valent atom so that at least one exposed non-framework charge balancing cation is increased in the structure to effect higher selective gas selectivity over that of a similar molecular structure having only trivalent or higher valent atoms.

2. The zeolite adsorbent of claim 1 wherein the divalent atom is selected from the group comprising zinc, cobalt, iron, magnesium, manganese and beryllium.

3. The zeolite adsorbent of claim 2 wherein the divalent atom is zinc.

4. The zeolite adsorbent of claim 2 wherein the divalent atom is cobalt.

5. The zeolite adsorbent of claim 1 wherein said structure is selected from the group comprising EMT, EMT/FAU, BEA, CAN, GME, LTL, MAZ, MOR, MTW, and OFF.

6. The zeolite adsorbent of claim 1 wherein said structure is selected from the group comprising Li-ZnEMT, Li-ZnEMT/FAU, Li-ZnBEA, Li-ZnCAN, Li-ZnGME, Li-ZnLTL, Li-ZnMAZ, Li-ZnMOR, Li-ZnMTW and Li-ZnOFF.

7. A process for selectively adsorbing nitrogen from a gas mixture containing nitrogen and at least one less strongly adsorbed component which comprises contacting the gas mixture with a zone of an adsorbent which is selective for adsorption of nitrogen, selectively adsorbing nitrogen on the adsorbent and discharging the gas mixture minus the adsorbed nitrogen out of the zone wherein the adsorbent comprises a zeolite material containing a molecular structure containing at least one monovalent or divalent atom substituted for at least one trivalent or higher valent atom so that at least one exposed non-framework charge balancing cation is increased in the structure to effect higher nitrogen selectivity over that of a molecular structure having only trivalent or higher valent atoms.

8. The process of claim 7 wherein the gas is air.

9. The process of claim 7 wherein the divalent atom is selected from the group comprising zinc, cobalt, iron, magnesium, manganese and beryllium.

10. The process of claim 7 wherein said structure is selected from the group comprising EMT, EMT/FAU, BEA, CAN, GME, LTL, MAZ, MOR, MTW, and OFF.
